# EUROPEAN PATENT APPLICATION

(11) **EP 0 735 237 A1**
(43) Date of publication of application: **02.10.1996**
(21) Application number: 95302026.0
(22) Date of filing: 27.03.1995
(51) Int. Cl.: E21D 9/08, C09K 7/08

(54) **Method for shield excavating soil layer**

(71) Applicant: NISSAN CHEMICAL INDUSTRIES LTD., Tokyo (JP); THE ZENITAKA CORPORATION, Nishi-ku, Osaka-shi, Osaka-fu (JP)
(72) Inventor: Uchida, Jun, Nissan Kagaku Apt. No. 1, Room 113, Nei-gun, Toyama-ken (JP); Muto, Masanori, Nerim-ku, Tokyo (JP); Kitagawa, Akio, Chiba-shi, Chiba-ken (JP); Saito, Masaru, Kawaguchi-shi, Saitama-ken (JP); Tsuruoka, Tanehide, Toyonaka-shi, Osaka-fu (JP)
(74) Representative: Griffin, Kenneth David

(57) **Abstract**

A method for shield excavating a soil layer in which a shield excavator is operated while injecting a filling material into a face of the soil layer is improved by applying to the method a filling material composed of a stable aqueous paste comprising an aqueous silica jelly in a form of a particle having a size of 300 µm or less and an aqueous liquid in an amount to give the paste a viscosity of 50 to 10⁶ mPa·s at 20°C, said aqueous silica jelly containing 1 to 60% by weight of silica as SiO₂.

## Description

The present invention relates to an improvement in a method of excavating a soil layer with a shield excavator, and is more specifically directed to a method for creating a tunnel in a ground by excavating a soil layer in the ground with a shield excavator while injecting into a face of the soil layer under excavation a filling material.

The conventional shield excavator has a rotative plate settled at the head of the excavator and facing to a face of the soil layer, said rotative plate having cutters equipped on the plate for cutting off the face of the soil layer, a soil pressure chamber for holding the soil cut off by the cutter, said chamber being settled at the rear of the rotative plate, a stirrer for stirring the cut off soil in the chamber, and a conveyer for discharging the stirred soil in the chamber thereout and conveying the soil back to a gate through which the soil is discharged.

In a method of excavating a soil layer with a shield excavator, there was formerly adopted a soil pressure shield excavation method in which any material was not injected into the face during the excavation.

Recently, instead of the soil pressure shield excavation method, there has been mainly adopted a shield excavation method in which the soil layer is excavated with a shield excavator while injecting into a face of the soil layer under excavation a filling material which is transported in a pipe to the rotative plate from the source of the filling material outside the tunnel under excavation. There have been adopted various kinds of substances as the filling material.

In a mud pressure shield excavation method for excavating a soil layer to create, for example, a tunnel or the like, there has been used an aqueous muddy slurry containing generally a bentonite or a clay as the main dispersant. The mud pressure shield excavation method has brought about many advantages in that the slurry can supplement fine particles in the mud to a face of a natural ground which is poor in fine particles of soil, and that the method can be applied widely to a clayey ground and a sand ground, and further even to a sand to gravel ground, since the underground water near the face can be replaced by the mud.

However, when the mud pressure shield excavation method is applied to such a ground rich in underground water having a high pressure as sand layer, or sand to gravel layer having 70% or more of gravel, there occurs some problems in that the formed composition of the soil particles cut off often causes stop of rotation of the cutter because of unusual elevation of cutting torque, poor flowability of the cut off soil in a soil pressure chamber and a mechanism such as a screw conveyer or a screw of a type of ribbon for discharging the cut off soil, blowing of underground water, or lowering of soil pressure in the chamber which is necessary to meet the soil pressure at the face.

In an air bubble shield excavation method, there has been used bubbles of air in a form of a soft cream like a shaving cream as the filling material. The air bubble shield excavation method has brought about an advantage in that the cut off soil has an improved flowability, since the bubbles serve as bearings in the cut off soil.

In order to solve the problems encountered in the mud pressure shield excavation method, Japanese Patent Publication No. Hei 5-42560 (1993) discloses an improved filling material composed of a mixture of an aqueous muddy slurry and air bubbles.

Further, a high polymer of a type of water absorbent has been used as the filling material with an advantage in that the polymer improves suppression of gushing of water from the face.

The bentonite, bubbles of air or high polymer of a type of water absorbent used in these methods gives a problem in that the cut off soil discharged out of the tunnel contains the pollutive substance.

In Japanese Unexamined Patent Publication No. Hei 4-202998 (1992) is disclosed a filling material which is prepared by mixing water and a powder of polymeric silicate. However, the slurry of the polymeric silicate obtained by the mixing lacks stability, and often causes separation of water from the sedimented silicate. The slurry of the polymeric silicate has a relatively large specific gravity, and necessitates a large power to transport it by pump. Further, in the handling of the powdery silicate, there occurs pollution of the handling environment induced by the flying up of the powdery silicate.

In Japanese Unexamined Patent Publication No. Hei 4-343997 (1992) is disclosed a filling material composed of an aqueous silica jelly in a form of a block. The block of the aqueous silica jelly does not contain such a pollutive substance as bentonite, bubbles of air or high polymer used in the prior art, and well be injected and penetrated into the face of the soil layer resulting in preventing the gushing of the underground water at the face. The aqueous silica jelly has many other advantages in that it has a relatively small specific gravity, that it decreases cutting resistance of the soil at the face, and that it improves the flowability of the cut off soil in the soil pressure chamber and the screw conveyer.

However, the block of the aqueous silica jelly, though it may be one of the most advantageous material in the prior art, still has problems in that it shows a great resistance upon transporting it in a long pipe binding the cutter potion of the excavator in the bored tunnel and the outlet of the jelly plant which is placed outside of the bored tunnel and in which the jelly is prepared, and that it often shows steep resistance upon injecting it into the face of the boulder layer and the jelly discharged to the face flows immediately backward to the soil pressure chamber resulting in a failure of constant injection of the jelly into the face of the boulder layer.

It is an object of the present invention to provide an improvement in the method of excavating a soil layer with a shield excavator while injecting into the face of a soil layer under excavation a filling material.

There is provided, according to the present invention, a shield excavation method for excavating a soil layer by operating a shield excavator provided with constituents (a) to (e) :
(a) a rotative plate settled at the head of the excavator and facing to a face of the soil layer, said rotative plate having cutters equipped on the rotative plate for cutting the face of the soil layer and an outlet opened to the face for injecting a filling material in a form of fluid,
(b) a soil pressure chamber for holding a mixture of the soil and the filling material which is cut off by the cutter, said chamber being settled at the rear of the rotative plate,
(c) a stirrer for stirring the mixture held in the chamber,
(d) a conveyer for discharging the stirred mixture in the chamber thereout and conveying the mixture back to a gate through which the mixture is discharged, and
(e) a pipe for transporting the filling material, one end of said pipe being connected to the outlet at the rotative plate through which the filling material is injected and another end of said pipe being connected to an outlet of a supplier of the filling material,
while supplying to the pipe the filling material under a pressure sufficient to cause injection of the filling material into the face, characterized in that the filling material is composed of a stable aqueous paste comprising an aqueous silica jelly in a form of a particle having a size of 1 to 300 microns (µm) and an aqueous liquid in an amount to give the paste a viscosity of 50 to 10⁶ mPa·s at 20°C, said aqueous silica jelly containing 1 to 60% by weight of silica as SiO₂.

The aqueous silica jelly has no fluidity. The jelly may be prepared first in a form of a block by any methods known to the art which include, for example, a method of causing a gelatinous gelling to an aqueous solution of a water glass such as sodium, potassium or lithium, to an aqueous silica sol or to an aqueous solution of silicic acid or an oligomer of the silicic acid which is obtained by decationizing the aqueous solution of the water glass. The aqueous silica jelly contains 1 to 60%, preferably, 3 to 30% by weight of silica as SiO₂, and may contain small amount of an acid, an alkali or a salt.

From an aqueous silica sol, for example, commercially available silica sol having an SiO₂ concentration of 1 to 60%, preferably, 3 to 30% by weight may be prepared the aqueous silica jelly by adding to the sol an acid such as, for example, sulfuric, hydrochloric, acetic, citric, etc., or an alkali such as, for example, hydroxide of sodium, potassium, ammonium or quaternary ammonium, an amine, etc., in an amount to neutralize the sol to a pH, for example, near 5 to 8, or by adding to the sol a salt such as, for example, sodium chloride, magnesium sulfate, etc., in an amount sufficient to cause a gelatinous gelling to the sol. From an aqueous solution of the water glass having, for example, an SiO₂ concentration of 1 to 40%, preferably, 3 to 30% by weight may be prepared the aqueous silica jelly by adding to the solution such an acid as, for example, mentioned above in an amount to neutralize the solution and cause a gelatinous gelling to the solution. From an Aqueous solution of silicic acid or an oligomer thereof having an SiO₂ concentration of 1 to 15%, preferably, 3 to 10% by weight may be prepared the aqueous silica jelly by leaving the solution as it is, or adding to the solution such an alkali as, for example, mentioned above or such a salt as, for example, mentioned above in amount to cause a gelatinous gelling to the solution. The acid, alkali or salt to be added may preferably be in a form of an aqueous solution.

The stable aqueous paste may be prepared by crushing the block of the aqueous silica jelly so that finely divided particles of the jelly having a size of 1 to 300 µm, preferably, 1 to 100 µm are formed. The crushing may be carried out by giving to the block of the jelly in a container a shear sufficient to cause division of the block to an extent that the resulting particles of the jelly have the above mentioned size, and is preferably embodied by using, for example, an intensive mixer such as a homogenizer in commerce.

With the proceeding of the division of the block is released a small amount of the aqueous medium contained in the block of the jelly therefrom resulting in a formation of an aqueous paste in a form of fluid comprising the fine particles of the jelly and the released liquid existing among the particles of the jelly. The crushing of the block of the jelly may preferably be carried out in the presence of an aqueous liquid in an amount of 50% by weight or less, preferably, 40% by weight or less of the jelly by adding thereto an aqueous liquid resulting also in a formation of an aqueous paste. The stable aqueous paste is preferably obtained by continuing the crushing of the block of the jelly until a fluid formed in the container has a viscosity of 50 to 10⁶ mPa·s at 20°C.

The aqueous liquid may be water or an aqueous solution or dispersion of a material so long as the material has not pollutive property. The aqueous liquid and the size of the particles of the jelly give to the aqueous paste a viscosity of 50 to 10⁶ mPa·s, preferably, 50 to 5000 mPa·s at 20°C and a stability to hold the aqueous paste at the viscosity. The viscosity may be measured by a Brookfield viscometer with a rotor No. 3 at a speed of 12 rpm of the rotor.

It is believed that the particles formed by the crushing of the block of the aqueous silica jelly have almost the same composition and structure as those before the crushing, and still consist essentially of an aqueous silica jelly, since only a small amount of aqueous liquid is released from the block of the jelly upon the crushing, and that the aqueous liquid in the paste serves to prevent the fine particles of the jelly from recombination thereof and hold the particles discrete in the paste resulting in maintaining the paste in a stable fluid having the viscosity.

The stable aqueous paste is thixotropic in property and has an excellent fluidity to transport it even in a long pipe. The stable aqueous paste is well penetratable into the face of any type of soil layer, since the particles of the jelly in the paste have a fine size of 300 µm or less. An aqueous paste in which the particles of the jelly have a size larger than 300 µm is poor in fluidity. The stable aqueous paste is hardly obtained from a jelly having an SiO₂ content outside of the range of 1 to 60% by weight. The stable aqueous paste can be used as it is as the filling material applied to the excavation method according to the present invention, or the filling material can contain any material desired together with the stable aqueous paste so long as the improvement according to the invention is attained.

A shield excavating method according to the present invention will be explained hereunder in more detail with reference to the accompanying drawings and examples.
Fig. 1 is a block diagram in which a shield excavator and a plant for supplying the stable aqueous paste are shown;
Fig. 2 is an enlarged view of the main part of the shield excavator shown in Fig. 1;
Fig. 3 is a front view of a left half of a shield excavator;
Fig. 4 is a graph showing variations of soil pressure in a soil pressure chamber with time under excavation; and
Fig. 5 is a graph showing variations of oil pressure in a unit to give cutting power to the cutter so called cutter pressure, and oil pressure in a unit to give screwing power to the screw conveyer so called screw pressure with time under excavation.

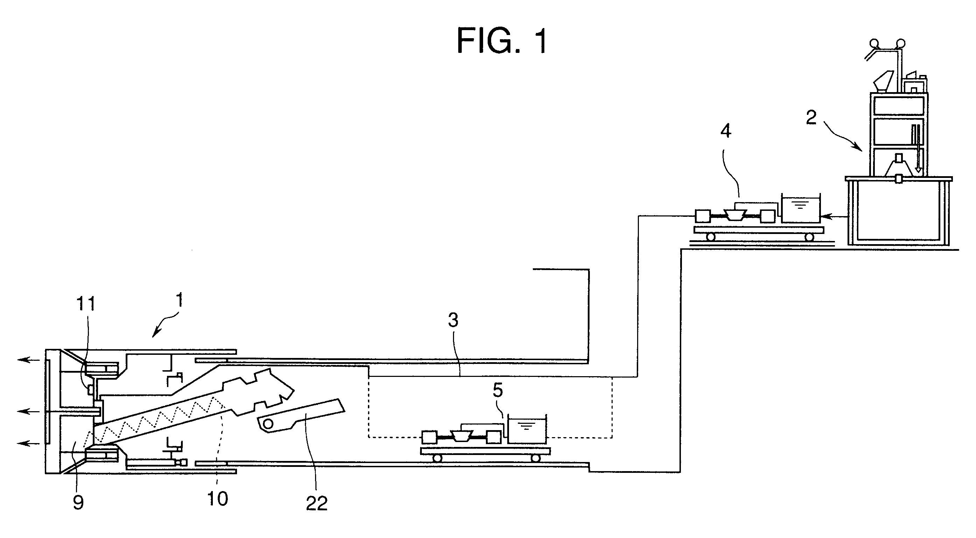

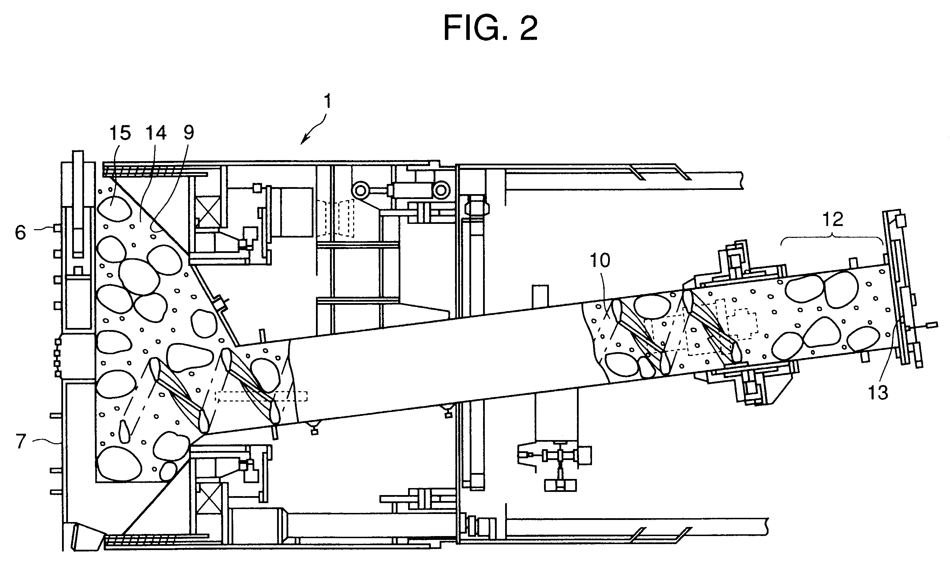

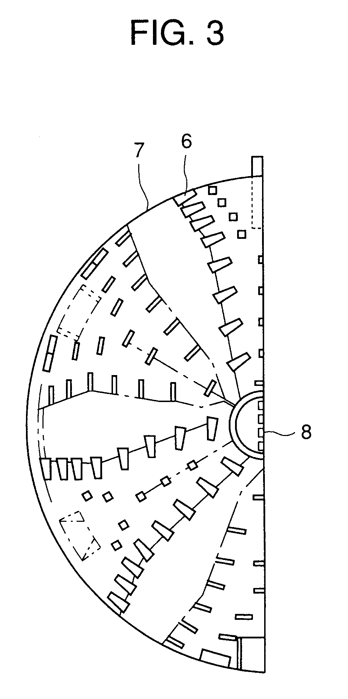

In Figs. 1 to 3, one end of a long pipe line 3 for transporting a filling material is connected to a shield excavator 1 and the other end of pipe line 3 is connected to a pump 4 which is placed in front of plant 2 for supplying the filling material. A relay pump 5 may be provided in pipe line 3 as needed. As rotative plate 7 is settled at the heat of excavator 1 and is facing to a face of a soil layer. Rotative plate 7 has cutters 6 for cutting the face of the soil layer and outlets 8 opened to the face for injecting the filling material. A soil pressure chamber 9 having a soil pressure gauge 11 is settled at the rear of rotative plate 7. A screw conveyer 10 of a type of ribbon is connected to soil pressure chamber 9. Screw conveyer 10 is terminated in a sand plug zone 12 at the end of which is provided a gate 13 for discharging a plasticized mixture of the soil and the filling material. Many boulders 15 contained in the soil are gown in the mixture which is conveyed by a belt conveyer 22.

### EXAMPLE 1

In this example was prepared a stable aqueous paste A from an aqueous silica sol having an SiO₂ content of 15% by weight, and the paste A was applied to a shield excavation of a sand to gravel layer having a gravel percentage of 70 to 80% and containing boulders.

Paste A was prepared by the following four steps. In the first step was prepared a diluted silica sol by mixing 140 liters of the silica sol with 439 liters of water. In the second step was prepared a controlled silica sol by mixing all of the diluted silica sol with 44 liters of an aqueous solution of sulfuric acid having an H₂SO₄ concentration of 5% by volume. In the third step was prepared 670 liters of an aqueous silica jelly in a form of a block by mixing all of the controlled silica sol with 47 liters of an aqueous solution of the water glass diluted to have a concentration of 40% by weight. In the forth step was prepared 1000 liters of paste A by continuing crushing all of the jelly in a block until a paste having a viscosity of 800 mPa·s was obtained. By the crushing was converted the block of the jelly into particles of the jelly having a size smaller than 300 µm.

Then paste A was supplied to the pipe line of the shield excavator as shown in Fig. 1 under a pressure to cause injection of the paste to the face and to the soil pressure chamber. The amount of the paste to be injected was controlled so as to meet the effective porosity or the porosity of the soil layer and to change the mixture of the soil and the paste to a plasticized soil in which the soil and the gravel were uniformly mixed. The soil pressure in the soil pressure chamber, the cutter pressure in a unit to cause the cutting power and the screw pressure in a unit to cause the screwing power were observed during the shield excavation.

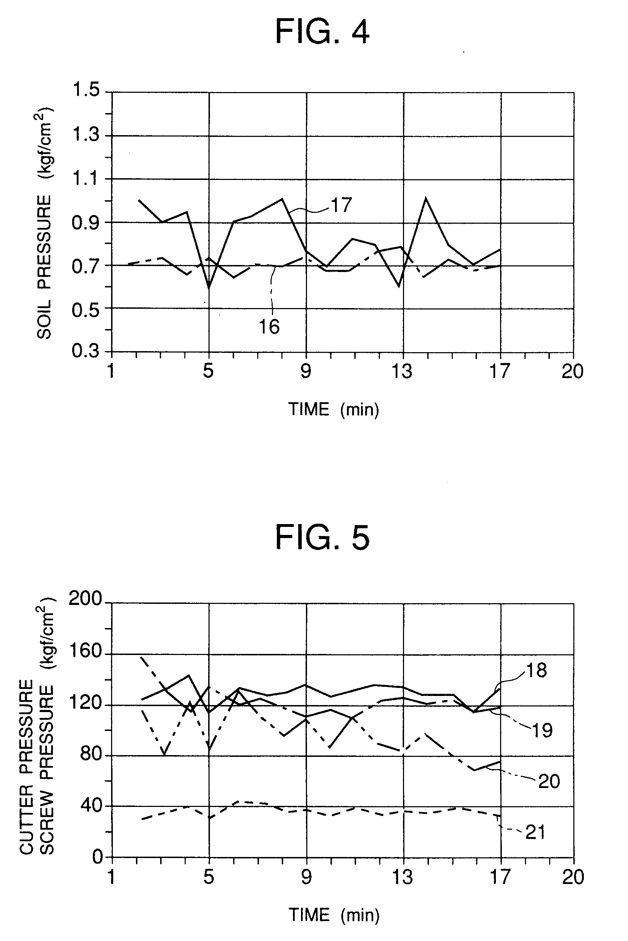

Dotted line 16 in Fig. 4 shows the soil pressure in the soil pressure chamber with time under excavation while injecting paste A. Solid line 17 in Fig. 4 shows also the soil pressure in the soil pressure chamber with time under excavation while injecting contrarily a conventional aqueous muddy slurry. Fig. 4 shows that the soil pressure under excavation according to the present invention is far more stable than that in the conventional method.

The cutter pressure for the cutting power shown by dotted line 19 and the screw pressure for the screwing power shown by chain line 21 in Fig. 5 are with the excavation while injecting the paste A. The cutter pressure for the cutting power shown by solid line 18 and the screw pressure for the screwing power shown by two-dotted line 20 in Fig. 5 are with the excavation while injecting the conventional aqueous muddy slurry. Fig. 5 also shows that the cutter pressure for the cutting power and the screw pressure for the screwing power under excavation according to the present invention are greatly stabilized in comparison with that in the conventional method.

### EXAMPLE 2

In this example was prepared a stable aqueous paste B from an aqueous silica sol having an SiO₂ content of 15% by weight.

Paste B was prepared by the following four steps. In the first step was prepared a diluted silica sol by mixing 105 liters of the silica sol with 327 liters of water. In the second step was prepared a controlled silica sol by mixing all of the diluted silica sol with 33 liters of an aqueous solution of sulfuric acid having an H₂SO₄ concentration of 5% by volume. In the third step was prepared 500 liters of an aqueous silica jelly in a form of a block by mixing all of the controlled silica sol with 35 liters of an aqueous solution of the water glass having a concentration of 39% by weight. In the forth step was prepared 1000 liters of paste B by continuing crushing all of the jelly in a block until a paste having a viscosity of 500 mPa·s was obtained. Particles of the jelly formed by the crushing had a size smaller than 300 µm.

Paste B could well be applied to the shield excavation of a sand layer and a sand to gravel layer which contains 70% or less of gravel.

### EXAMPLE 3

In this example was prepared a stable aqueous paste C from an aqueous solution of a sodium water glass having a concentration of 39% by weight.

Paste C was prepared by the following three steps. In the first step was prepared a diluted aqueous solution of the water glass by mixing 60 liters of the water glass and 795 liters of water. In the second step was prepared 1000 liters of a jelly in a form of a block by mixing all of the diluted solution of the water glass and 145 liters of an aqueous solution of sulfuric acid having an H₂SO₄ concentration of 5% by volume. In the third step was prepared 1000 liters of aqueous paste C by continuing crushing all of the jelly in a block until a paste having a viscosity of 200 mPa·s was obtained. Particles of the jelly formed by the crushing had a size smaller than 300 µm.

Paste C could well be applied to the shield excavation of a clayey layer.

Specific gravity and pH were measured with the Paste A, B and C, and the values are listed in Table 1 together with the viscosities of the pastes mentioned above.

**Table 1**

| paste | spec. grav. | viscos. (mPa·s) | pH |
|---|---|---|---|
| A | 1.02 | 800 | 7.0 |
| B | 1.01 | 500 | 7.0 |
| C | 1.03 | 200 | 6.5 |

The stable aqueous paste is not pollutive and is easily prepared in a relatively compact plant which can be settled near the ground to be excavated.

It is desirable, in general, to prepare and use selectively a stable aqueous paste so as to meet the kind of ground which will be shield excavated, that is, a stable aqueous paste of a type of paste A for a ground composed of sand to gravel layer containing boulders and 70% or more of gravel; a stable aqueous paste of a type of paste B for a ground composed of sand layer or sand to gavel layer containing 70% or less of gravel; and a stable aqueous paste of a type of paste C for a ground composed of clayey layer.

The shield excavation method according to the present invention has many advantages and gives improvement in shield excavating various grounds by a shield excavator owing to the applicable filling material composed of a stable aqueous paste comprising the fine particles of an aqueous silica jelly and an aqueous liquid.

The stable aqueous paste may be transported smoothly to the excavator through a pipe line into which the paste is supplied from the plant. The high fluidity of the paste also gives to the filling material an excellent injectability into a face of various soil layers and gives to the filling material a property serving as an excellent plasticizer upon mixing the soil cut off out of the face, and further gives excellent stability to the operation of the excavator even in a gravel or boulder layer.

The fine particles of the jelly in the paste are well injectable into the face of the soil layer resulting in pushing back the underground water in the layer forward and preventing the underground water from gushing thereof.

The plasticized soil containing the particles of the jelly discharged out of the tunnel, in contrast to the discharged soil in the conventional method in which the discharged soil containing a filling material, for example, bentonite changes to a mud, is dried to such a water content ratio as a half of that of the undried soil in a hopper or a yard in which the soil is stocked. To the dried soil, there may be applied the same treatment as in an ordinary soil.

## Claims

1. A shield excavation method for excavating a soil layer by operating a shield excavator provided with constituents (a) to (e) :
(a) a rotative plate settled at the head of the excavator and facing to a face of the soil layer, said rotative plate having cutters equipped on the rotative plate for cutting the face of the soil layer and an outlet opened to the face for injecting a filling material in a form of fluid,
(b) a soil pressure chamber for holding a mixture of the soil and the filling material which is cut off by the cutter, said chamber being settled at the rear of the rotative plate,
(c) a stirrer for stirring the mixture held in the chamber,
(d) a conveyer for discharging the stirred mixture in the chamber thereout and conveying the mixture back to a gate through which the mixture is discharged, and
(e) a pipe for transporting the filling material, one end of said pipe being connected to the outlet at the rotative plate through which the filling material is injected and another end of said pipe being connected to an outlet of a supplier of the filling material,
while supplying to the pipe the filling material under a pressure sufficient to cause injection of the filling material into the face, characterized in that the filling material is composed of a stable aqueous paste comprising an aqueous silica jelly in a form of a particle having a size of 1 to 300 microns (µm) and an aqueous liquid in an amount to give the paste a viscosity of 50 to 10⁶ mPa·s at 20°C, said aqueous silica jelly containing 1 to 60% by weight of silica as SiO₂.

2. A method according to claim 1, wherein the liquid comprised in the paste is water in an amount of 50% by weight or less of the jelly.

3. A method according to claim 1, wherein the paste is formed by strongly stirring a block of an aqueous silica jelly or a mixture of a block of an aqueous silica jelly and water in an amount of 50% by weight or less of the jelly until the resulting fluid has a viscosity of 50 to 10⁶ mPa·s at 20°C, said block of an aqueous silica jelly containing 1 to 60% by weight of silica as SiO₂.
